# EUROPÄISCHE PATENTSCHRIFT

(11) **EP 1 817 187 B1**
(45) Veröffentlichungstag und Bekanntmachung des Hinweises auf die Patenterteilung: **19.05.2010**
(21) Anmeldenummer: 05794765.7
(22) Anmeldetag: 30.09.2005
(51) Int. Cl.: B60H 1/00

(54) **LUFTMISCHKLAPPE**
AIR MIXER VENT
VOLET DE MELANGE D'AIR

(30) Priorität: 01.10.2004 DE 102004048344
(43) Veröffentlichungstag der Anmeldung: 15.08.2007
(73) Patentinhaber: Behr GmbH & Co. KG, 70469 Stuttgart (DE)
(72) Erfinder: HACKL, Roland, 70197 Stuttgart (DE); MÖLLERT, Thorsten, 70376 Stuttgart (DE); ZELLER, Thomas, 70376 Stuttgart (DE)
(86) Internationale Anmeldenummer: PCT/EP2005/010589
(87) Internationale Veröffentlichungsnummer: WO 2006/037567

(56) Entgegenhaltungen:
- EP-A- 0 423 778
- DE-A- 10 025 334
- DE-A1- 10 031 991
- DE-A1- 19 842 875
- DE-A1- 19 916 992
- FR-A- 2 788 019
- US-A- 5 836 813
- US-A1- 2004 069 484
- US-B1- 6 386 966

## Beschreibung

Die Erfindung betrifft eine Klimaanlage in einem Kraftfahrzeug gemäß dem Oberbegriff des Anspruches 1.

Aus der DE 198 42 875 A1 ist eine Luftmischklappe für eine Klimaanlage eines Kraftfahrzeugs bekannt. Dabei umfasst die Klimaanlage einen Verdampfer und einen Heizkern, die etwa horizontal angeordnet sind. In der Klimaanlage ist eine Luftmischklappe zum Einstellen des Strömungsverhältnisses zwischen der durch den Heizkern hindurchtretenden Luft und der durch einen Bypasskanal hindurchtretenden Luft angeordnet. An einer Fläche der Luftmischklappe, die an der Seite des Bypasskanals angeordnet ist, sind Luftführungsplatten zum Führen von Luft ausgebildet. Hierbei handelt es sich um im Wesentlichen flach ausgebildete Luftmischklappen, von deren einen, in Richtung des Bypasskanals im denselben verschließenden Zustand gerichteten Seite die Luftführungsplatten senkrecht abstehen. Ein Gebläse ist so angeordnet, dass die Luft in der Luftblasrichtung etwa horizontal geblasen wird und hiernach nach oben in Richtung zum Heizkem strömt.

Aus der DE 100 25 334 ist eine Klimaanlage bekannt mit einer Klappe vom Walzen- bzw. Trommel- bzw. Schalentyp, mittels welcher selektiv ein Kaltluftübertragungszweig und Lufterwärmungszweig zu schließen bzw. zu versperren ist.

Ferner zeigt die US 6,386,966 B1 eine Innenluft-/Außenluft-Umschaltklappe, weiche an dem peripherem Wandteil Rippen aufweist.

Die US 2004/0069484 zeigt eine zylindrische Trommelklappe zum Leiten von Luft zu einem Fondraum.

Ausgehend von diesem Stand der Technik ist es Aufgabe der Erfindung, eine verbesserte Luftmischklappe zur Verfügung zu stellen. Diese Aufgabe wird gelöst durch eine klimaanlage mit den Merkmalen des Anspruchs 1. Vorteilhafte Ausgestaltungen sind Gegenstand der Unteransprüche.

Erfindungsgemäß ist eine Klimaanlage mit einer Luftmischklappe, insbesondere für Kraftfahrzeuge, vorgesehen, mit einem an der Luftmischklappe vorgesehenen Luftleitelement, welches von einer Fläche der Luftmischklappe absteht, wobei die Luftmischklappe als eine im Wesentlichen teilzylindrische Klappe oder im Querschnitt zur Schwenkachse bogenförmig ausgebildete Klappe ist. Dabei fällt bevorzugt die Schwenkachse mit der Mittelachse des entsprechenden Zylinders zusammen. Eine derartige Luftmischklappe ist in der Kraftfahrzeug-Klimaanlage zwischen dem vom Heizer kommenden Luftkanal und dem direkt vom Verdampfer kommenden Bypasskanal vor dem Luftmischbereich der Klimaanlage angeordnet, wobei die Luftmischklappe beide Luftströme regelt, so dass im Gegensatz zur o.g. DE 198 42 875 A1 nur eine Luftmischklappe erforderlich ist.

Durch das Luftleitelement, das an der gekrümmten Luftmischklappe angebracht oder ausgebildet ist, lässt sich das Regelverhalten linearisieren, so dass die Regelung vereinfacht wird und eine direkte Stellbewegungsübertragung - ohne winkelabhängige Übersetzung mit Hilfe beispielsweise eines Kurvengetriebes - möglich ist. Dies hat unter anderem auch Vorteile in Hinblick auf die Regelkurven von Rechts- und Linkslenkervarianten, welche durch das Vorsehen eines Luftleitelements einen vergleichbaren Verlauf erhalten.

Das Luftleitelement ist in einem Winkel von 5° bis 45°, insbesondere 10° bis 40° und besonders bevorzugt von 15° bis 35°, zur radialen Richtung - bezogen auf die Schwenkachse - geneigt. Durch die entsprechende schräge Ausbildung wird die Linearität des Verhältnisses von Temperaturdifferenz und Verstellweg der Luftmischklappe optimiert, so dass sich das Regelverhalten vereinfacht.

Das Luftleitelement ist bevorzugt auf der Teilzylinderinnenfläche der Luftmischklappe angeordnet, wobei bei der Luftmischklappe bei Betrieb bevorzugt die Schwenkachse in Strömungsrichtung nach dem Teilzylinder angeordnet ist.

Das Luftleitelement ist parallel zur Schwenkachse der Luftmischklappe verlaufend angeordnet, jedoch ist auch ein schräger Verlauf entlang der Fläche der Luftmischklappe möglich, welcher gegebenenfalls zusätzliche positive Einflüsse auf eine gezielte Luftverteilung oder -verwirbelung im Mischbereich haben kann.

Der Übergang von Luftmischklappe zu Luftleitelement ist bevorzugt im Fußbereich abgerundet ausgebildet, was die Luftleitfunktion etwas verbessert und zudem die Festigkeit erhöht.

Das Luftleitelement ist vorzugsweise - gegebenenfalls abgesehen vom Fußbereich - gerade ausgebildet, jedoch ist auch ein leicht gekrümmter Verlauf des Luftleitelements möglich, um die Luft optimal zu leiten.

Bevorzugt ist das Luftleitelement zwischen zwei senkrecht zur Schwenkachse verlaufenden Verbindungsflächen der Luftmischklappe verlaufend ausgebildet, wobei mindestens eine der Verbindungsflächen gegebenenfalls auch beabstandet vom entsprechenden Ende der Luftmischklappe angeordnet sein kann. Dabei dienen die Verbindungsflächen der Erhöhung der Stabilität, so dass das Luftleitelement beispielsweise etwas dünner ausgelegt werden kann, wodurch Material- und somit auch Gewichtseinsparungen möglich sind.

Das Luftleitelement ist bevorzugt außermittig angeordnet, wobei es im eingebauten Zustand bevorzugt leicht in Richtung Warmluftkanal verschoben angeordnet ist, jedoch ist die exakte Anordnung auch abhängig vom Warmluftkanal- und Kaltluftkanalverlauf und der Ausgestaltung des anschließenden Mischbereichs.

Das Luftleitelement ist bevorzugt zum Warmluftkanal hin gegenüber der radialen Richtung verlaufend angeordnet, jedoch ist auch in diesem Fall die exakte Anordnung abhängig vom Warmluftkanal- und Kaltluftkanalverlauf und der Ausgestaltung des anschließenden Mischbereichs und zudem von der mittigen oder außermittigen Anordnung des Luftleitelements.

Das Luftleitelement weist eine Länge von maximal der Hälfte und minimal einem Fünftel des Radius des Teilzylinders bei aufeinander fallender Mittel- und Schwenkachse auf, um das Regelverhalten optimal zu linearisieren. Die Länge beträgt zudem bevorzugt +/- 50%, insbesondere +/-20%, des Abstands des Luftleitelements in gerader Linie vom näher liegenden in Schwenkachsenrichtung verlaufenden Ende der Luftmischklappe.

Bevorzugt ist, insbesondere bei langen Luftleitelementen, eine Rippe zwischen der Innenmantelfläche der bogenförmigen oder teilzylindrischen Klappe und einer Seite des Luftleitelements vorgesehen. Diese Rippe verläuft bevorzugt in einer Ebene senkrecht zur Schwenkachse und verhindert ein Einfallen des Luftleitelements nach dem Spritzgießen. Die Rippe endet bevorzugt im Wesentlichen in radialer Richtung bezüglich er Schwenkachse der Klappe.

Gemäß einer bevorzugten Weiterbildung umfasst die erfindungsgemäße Klimaanlage, insbesondere für ein Kraftfahrzeug zumindest eines der folgenden Bauteile umfasst: Wärmetauscher, Heizkörper, Verdampfer, Filter, Mischkammer, einen oder mehrere Strömungskanäle und eine oder mehrere Steuerklappen zur Verteilung der Luft auf die Austrittskanäle

Im Folgenden wird die Erfindung anhand zweier Ausführungsbeispiele unter Bezugnahme auf die Zeichnung im Einzelnen erläutert. Es zeigen:
- Fig. 1: einen ausschnittsweise dargestellten Schnitt durch eine Kraftfahrzeug-Klimaanlage mit erfindungsgemäßer Luft- mischklappe gemäß dem Ausführungsbeispiel,
- Fig. 2: eine perspektivische Ansicht der Luftmischklappe gemäß dem Ausführungsbeispiel, und
- Fig. 3: einen Schnitt quer zur Schwenkachse der Luftmischklappe von Fig. 2,
- Fig. 4: ein Diagramm zur Verdeutlichung der Linearisierung durch ein an einer teilzylindrischen Luftmischklappe, wie beim Aus- führungsbeispiel beschrieben, vorgesehenes Luftleitelement in Vergleich mit einer herkömmlichen Luftmischklappe ohne Luftleitelement, wobei die Temperaturdifferenzen über dem Klappenverstellweg jeweils für den linken und rechten Fuß- raum bei einer Klappenstellung Defrost/Fußraum dargestellt sind,
- Fig. 5: eine perspektivische Ansicht einer Luftmischklappe gemäß dem zweiten Ausführungsbeispiel,
- Fig. 6: eine andere perspektivische Ansicht der Luftmischklappe von Fig. 5,
- Fig. 7: eine seitliche Ansicht der Luftmischklappe von Fig. 5,
- Fig. 8: einen Schnitt entlang Linie VIII-VIII in Fig. 7,
- Fig. 9: eine andere seitliche Ansicht der Luftmischklappe von Fig. 5,
- Fig. 10: einen Schnitt entlang Linie X-X in Fig. 9,
- Fig. 11: einen Schnitt entlang Linie XI-XI in Fig. 9,
- Fig. 12: eine weitere Seitenansicht, und
- Fig. 13: einen Schnitt entlang Linie XIII-XIII in Fig. 12.

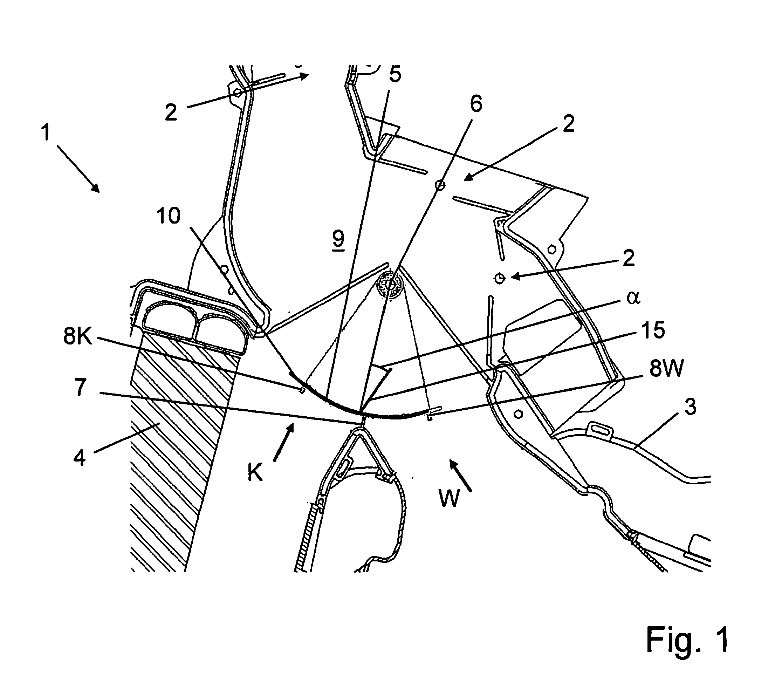

Eine Kraftfahrzeug-Klimaanlage 1 weist ein Luft von der Umgebung und/oder aus dem Fahrzeuginnenraum ansaugendes und dem Fahrzeuginnenraum temperiert über ein Luftkanalsystem, welches durch mehrere mittels Klappen regelbare Öffnungen 2 im Luftverteilergehäuse 3 angedeutet ist, zuführendes Gebläse (nicht dargestellt), einen Verdampfer 4 und einen Heizer (nicht dargestellt) auf, wobei zur Temperierung der dem Fahrzeuginnenraum zuführenden Luft eine teilzylindrische Luftmischklappe 5 vorgesehen ist, welche in Fig. 1 in einer Stellung dargestellt ist, in welcher der vom Verdampfer 4 kommende Kaltluftstrom K und der vom Heizer kommende Warmluftstrom W gemischt werden.

Die Luftmischklappe 5 ist um eine Schwenkachse 6 verschwenkbar, welche etwa in Strömungsrichtung in Verlängerung der den Kaltluftstrom K und den Warmluftstrom W trennenden Wand 7, parallel zu und beabstandet von derselben angeordnet ist. Die Schwenkachse 6 bildet die Mittelachse des fiktiven Zylinders, von welchem die Luftmischklappe 5 ein Segment ist, und der entsprechende Teil im Folgenden als Teilzylinder bezeichnet wird. Vorliegend hat der Teilzylinder einen Radius von ca. 75 mm, wobei der Segmentwinkel ca. 70° beträgt.

An der Teilzylinderaußenfläche sind parallel zur Schwenkachse 6 verlaufend zwei in radialer Richtung nach außen überstehende, Dichtflächen bildende Ränder 8 vorgesehen, welche mit Anlageflächen am Luftverteilergehäuse 3 zusammenwirken und im Bedarfsfall dafür sorgen, dass der Kaltluft- oder Warmluftkanal K bzw. W vollständig abgedichtet ist, und keine kalte oder warme Luft in den nachfolgenden Mischraum 9 und zu den Öffnungen 2 gelangt. Vorliegend ist der warmluftkanalseitige Rand 8W direkt am Ende der Teilzylinderaußenfläche ausgebildet, während der kaltluftkanalseitige Rand 8K beabstandet von dem entsprechenden anderen Ende der Teilzylinderaußenfläche angeordnet ist, so dass eine Nase 10 übersteht, welche der Unterstützung der Luftschichtung dient. Zusätzlich können an den Rändern 8 Dichtlippen, beispielsweise angespritzt, ausgebildet sein.

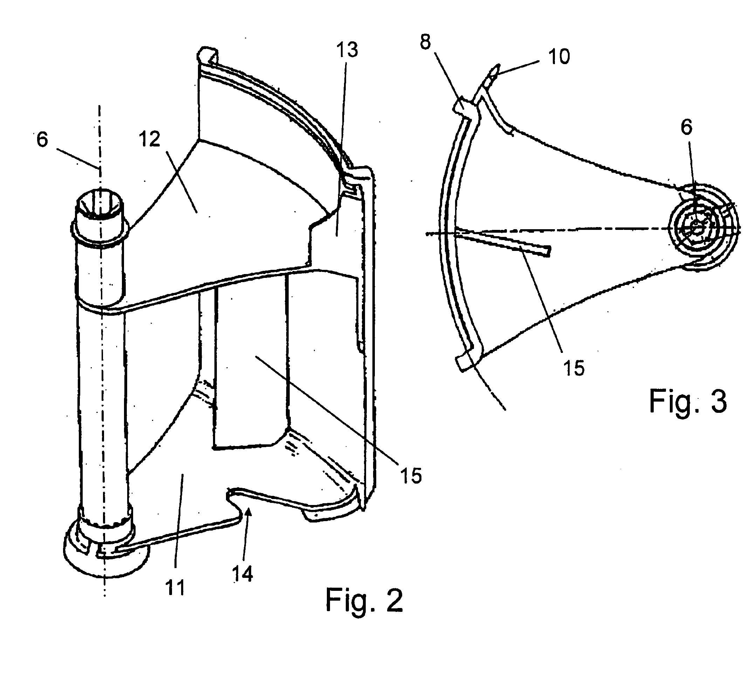

Zwischen der Schwenkachse 6 der Luftmischklappe 5 und dem Teilzylinder sind zwei Verbindungsflächen 11 und 12 ausgebildet, wobei die in Fig. 2 untere Verbindungsfläche 11 etwa am unteren Ende des Teilzylinders angeordnet ist, während die obere Verbindungsfläche 12 beabstandet, vorliegend etwa 25% der Gesamtlänge der Luftmischklappe 5, vom oberen Ende des Teilzylinders angeordnet ist. Dabei ist oberhalb der oberen Verbindungsfläche eine Wand 13 parallel zur Schwenkachse 6 in einem äußeren Bereich bis zur Nase 10 verlaufend ausgebildet (vgl. Fig. 2), wobei die Wand 13 nicht in radialer Richtung ausgerichtet ist, sondern zur tangentialen Ebene des Teilzylinders im Bereich des Zusammentreffens von Teilzylinder und Wand 13 in einem Winkel von unter 90° geneigt ausgerichtet ist. Die untere Verbindungsfläche 11 weist einen Ausschnitt 14 auf, welcher nasenseitig angeordnet ist.

Auf der Teilzylinderinnenfläche ist ein Luftleitelement 15 zwischen der oberen und der unteren Verbindungsfläche 12 und 11 ausgebildet, welches parallel zur Schwenkachse 6 verläuft und in einem Winkel α von 15° zur radialen Richtung in Richtung Warmluftkanal W geneigt ausgebildet ist. Die Länge beträgt vorliegend ca. 30 mm, also etwas weniger als die Hälfte des Radius des Teilzylinders und etwa dem Abstand in gerader Linie zum näheren Ende des Teilzylinders entsprechend. Das Luftleitelement 15 ist etwa mittig zwischen den beiden Rändern 8K und 8W angeordnet.

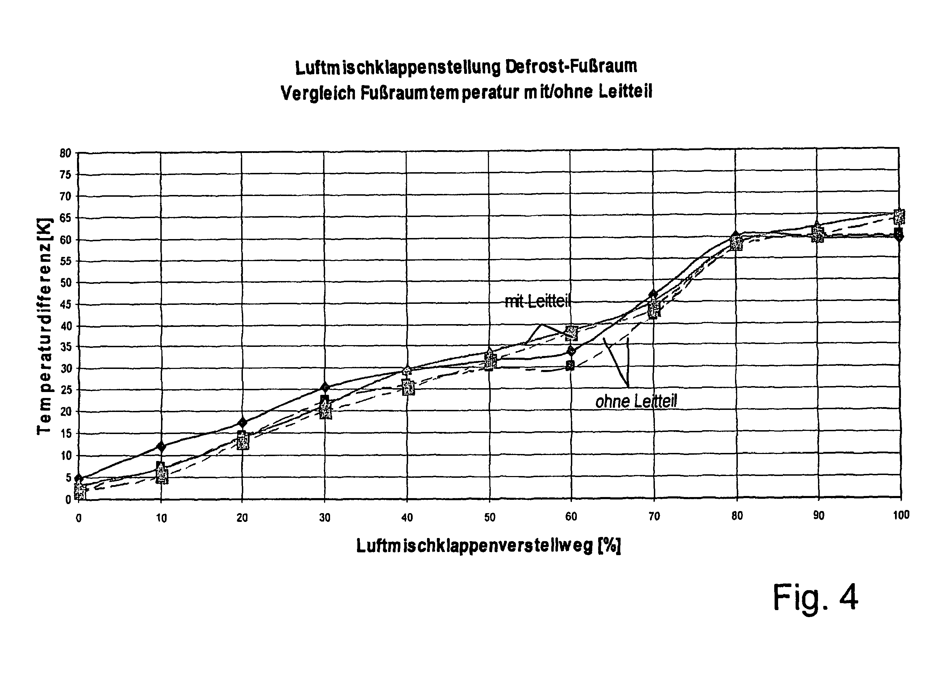

In Fig. 4 ist ein Diagramm zur Verdeutlichung der Linearisierung durch ein an einer teilzylindrischen Luftmischklappe, wie beim Ausführungsbeispiel zuvor beschrieben, vorgesehenes Luftleitelement in Vergleich mit einer herkömmlichen Luftmischklappe ohne Luftleitelement dargestellt, wobei die Temperaturdifferenzen über dem Klappenverstellweg jeweils für den linken und rechten Fußraum bei einer Klappenstellung der Klappen an den regelbaren Öffnungen 2 "Defrost/Fußraum" dargestellt sind. Wie aus dem Diagramm deutlich zu erkennen, ist der Kurvenverlauf der Temperaturdifferenz über dem Klappenverstellweg der Luftmischklappen mit Luftleitelement (graues Dreieck mit durchgezogener Linie: Fußraum links, graues großes Quadrat mit X mit gestrichelter Linie: Fußraum rechts) deutlich linearer als der Kurvenverlauf der Luftmischklappen ohne Luftleitelement (schwarze kleine Raute mit durchgezogener Linie: Fußraum links, schwarzes kleines Quadrat mit gestrichelter Linie: Fußraum rechts), so dass sich ein einfachere Zusammenhang zwischen Verstellweg und Temperatur und somit eine einfachere Regelbarkeit ergibt.

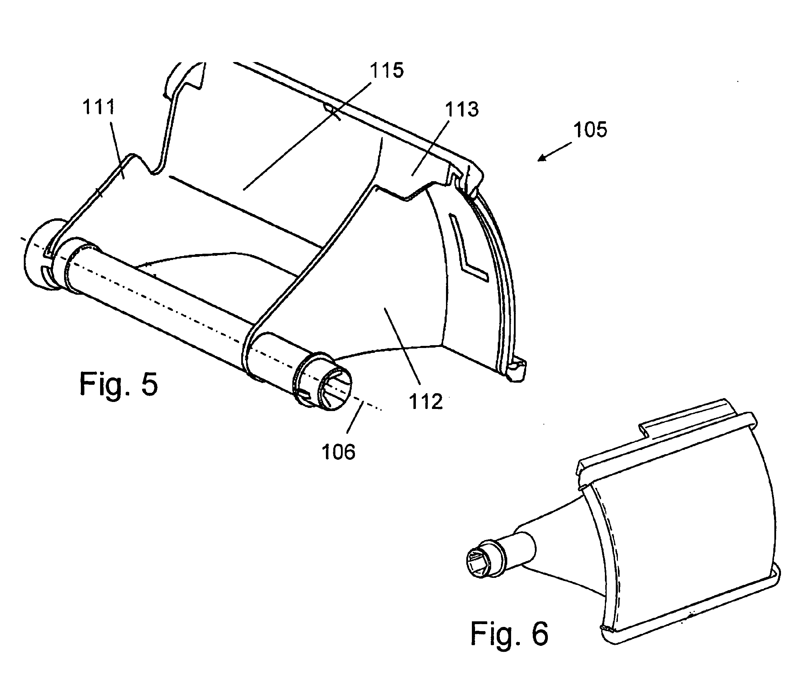

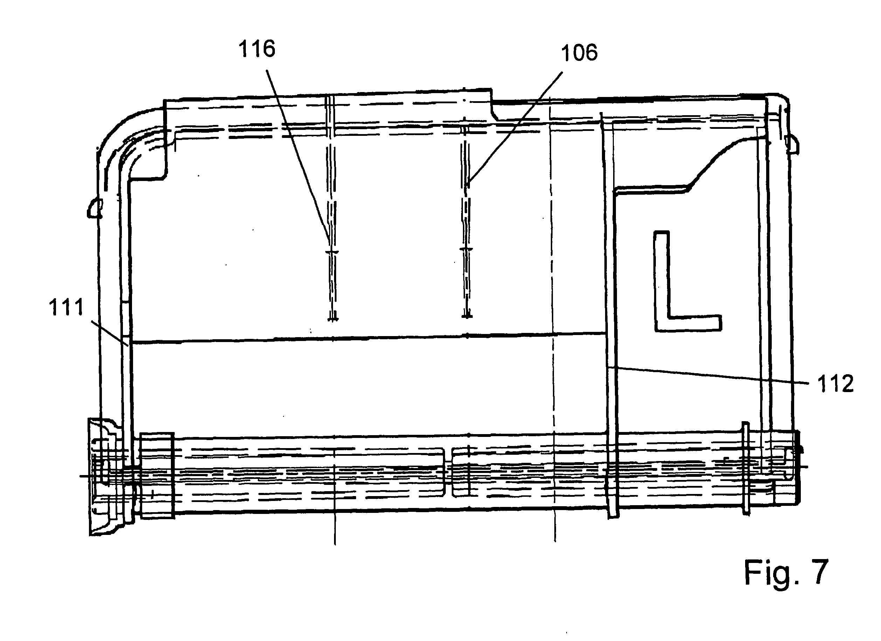

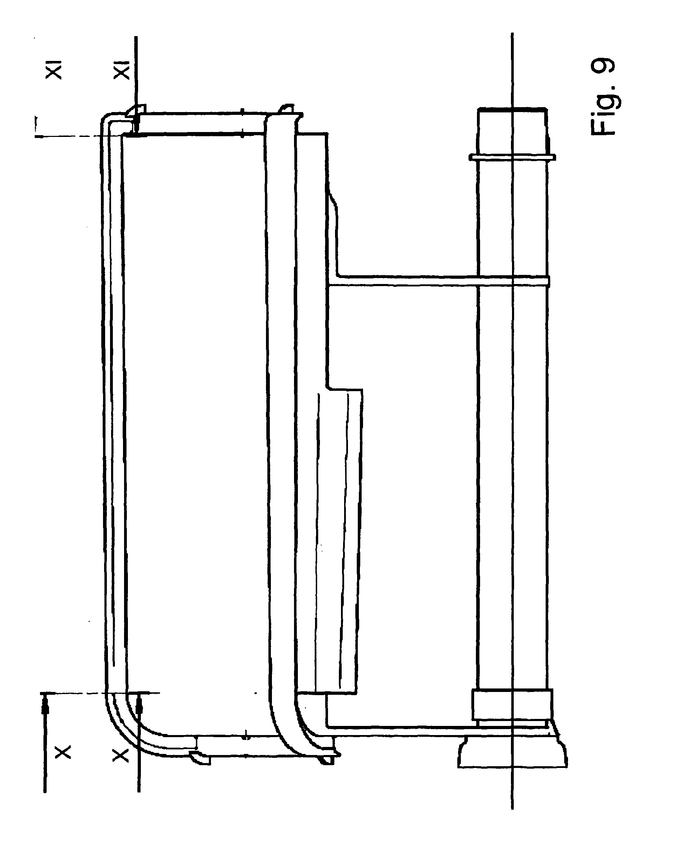

Die Figuren 5 bis 13 zeigen das zweite Ausführungsbeispiel einer erfindungsgemäßen Luftmischklappe 105. Hierbei sind mit dem ersten Ausführungsbeispiel gleiche oder gleichwirkende Teile mit um 100 höheren Bezugszeichen versehen.

Die Luftmischklappe 105 ist um ihre Schwenkachse 106 verschwenkbar in einem Luftverteilergehäuse (nicht dargestellt) angeordnet, welches im Wesentlichen dem des ersten Ausführungsbeispiels entspricht, so dass hierauf nicht näher eingegangen wird.

Die Schwenkachse 106 bildet - entsprechend dem ersten Ausführungsbeispiel - die Mittelachse eines fiktiven Zylinders, von welchem die Luftmischklappe 105 ein Segment ist, und der entsprechende Teil im Folgenden als Teilzylinder bezeichnet wird. Vorliegend hat der Teilzylinder einen Radius von ca. 76 mm, wobei der Segmentwinkel ca. 70° beträgt.

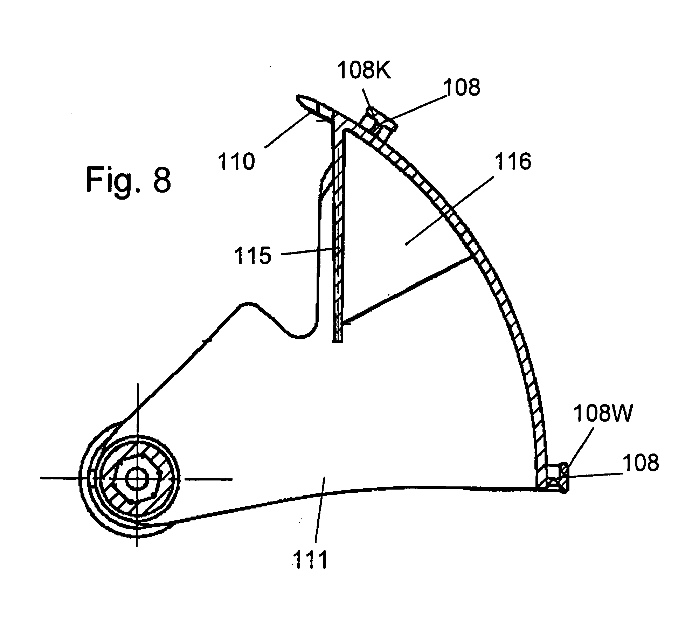

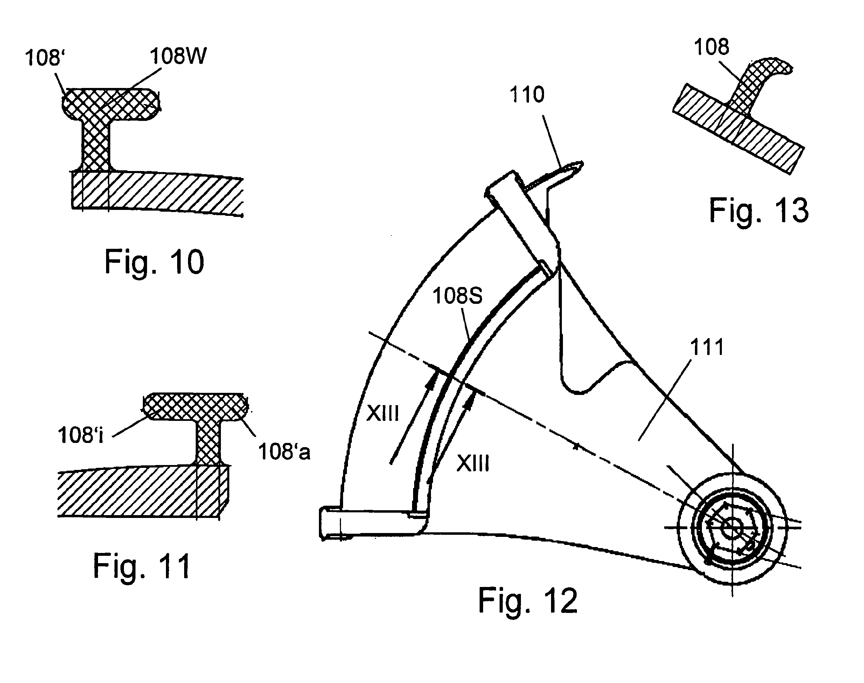

An der Teilzylinderaußenfläche sind, parallel zur Schwenkachse 106 verlaufend, zwei in radialer Richtung nach außen überstehende, Dichtflächen bildende Ränder 108 und ein weiterer an der einen Seitenfläche in axialer Richtung überstehender, Dichtflächen bildender Rand 108 vorgesehen, die aus einem weicheren Material an der Luftmischklappe 105 angespritzt sind. Diese Ränder 108 wirken mit Anlageflächen am Luftverteilergehäuse zusammen und sorgen im Bedarfsfall dafür, dass der Kaltluft- oder Warmluftkanal K bzw. W vollständig abgedichtet ist, und keine kalte oder warme Luft in den nachfolgenden Mischraum und zu den Öffnungen gelangt. Vorliegend ist der warmluftkanalseitige Rand 108W direkt am Ende der Teilzylinderaußenfläche ausgebildet (in Fig. 8 unteren angeordneter Rand 108W, der in den Figuren 10 und 11 im Detail dargestellt ist), während der kaltluftkanalseitige Rand 108K beabstandet von dem entsprechenden anderen Ende der Teilzylinderaußenfläche angeordnet ist, so dass wiederum eine Nase 110 übersteht, welche der Unterstützung der Luftschichtung dient. Zusätzlich sind an den Rändern 108 Dichtlippen 108' vorgesehen. Die Dichtlippen 108' verlaufen etwa parallel zur Außenfläche des Luftmischklappe 105, wobei vorliegend die nach außen ragende Dichtlippe 108'a deutlich kürzer ausgebildet ist als die nach innen ragende Dichtlippe 108'i.

Auf einer der Seitenflächen der Luftmischklappe 105, gebildet durch die Verbindungsflächen 111, ist ferner der zuvor genannte, weitere Rand 108S ausgebildet, welcher in Fig. 13 im Detail dargestellt ist. Der weitere Rand 108S verläuft in Umfangsrichtung der Luftmischklappe 105 und endet gekrümmt, wobei das Ende des Randes 108S etwa parallel zur Seitenfläche verläuft und der Überstand etwa der Dicke des Randes 108S entspricht.

Zwischen der Schwenkachse 106 der Luftmischklappe 105 und dem Teilzylinder sind zwei Verbindungsflächen 111 und 112 ausgebildet, wobei die in Fig. 5 links dargestellte Verbindungsfläche 111 etwa am Ende des Teilzylinders angeordnet ist, während die obere Verbindungsfläche 112 beabstandet, vorliegend etwa 25% der Gesamtlänge der Luftmischklappe 105, vom anderen Ende des Teilzylinders angeordnet ist. Dabei ist - entsprechend dem ersten Ausführungsbeispiel - endseitig der Verbindungsfläche 112 eine Wand 113 parallel zur Schwenkachse 106 in einem äußeren Bereich bis zur Nase 110 verlaufend ausgebildet (vgl. Fig. 5), wobei die Wand 113 nicht in radialer Richtung ausgerichtet ist, sondern zur tangentialen Ebene des Teilzylinders im Bereich des Zusammentreffens von Teilzylinder und Wand 113 in einem Winkel von unter 90° geneigt ausgerichtet ist.

Auf der Teilzylinderinnenfläche ist ein Luftleitelement 115 zwischen den beiden Verbindungsflächen 112 und 111 ausgebildet, welches parallel zur Schwenkachse 106 verläuft und in einem Winkel α von 30° zur radialen Richtung in Richtung Warmluftkanal W geneigt ausgebildet ist. Die Länge beträgt vorliegend ca. 40 mm, also etwa die Hälfte des Radius des Teilzylinders. Das Luftleitelement 115 ist etwas nach außen versetzt vom Rand 108K auf der Zylinderinnenseite angeordnet (siehe Fig. 8).

Über die Länge des Luftleitelements 115 sind zwei sich in radialer Richtung erstreckende Stützrippen 116 verteilt in Längsrichtung der Schwenkachse zwischen den beiden Verbindungsflächen 111 und 112 angeordnet. Die Stützrippen 116 enden im Bereich des freien Endes des Luftleitelements 115, wobei sie beabstandet vom Luftleitelement 115 in radialer Richtung bezüglich der Schwenkachse 106, d.h. senkrecht zum Teilzylinder enden.

## Patentansprüche

1. Klimaanlage (1), insbesondere für Kraftfahrzeuge, mit einem Luftverteilergerhäuse (3), einem Verdampfer (4), einem Heizer und einer im Wesentlichen teilzylindrischen Luftmischklappe (5, 105), die zwischen einem vom Heizer kommenden Warmluftkanal (W) und einem direkt vom Verdampfer (4) kommenden Bypasskanal (K) um eine Schwenkachse (6; 106) verschwenkbar angeordnet ist und diese regelt, wobei an der Teilzylinderinnenfläche der Luftmischklappe (5; 105) ein Luftleitelement (15; 115), welches von der Teilzylinderinnenfläche der Luftmischklappe (5; 105) absteht, angeordnet ist und die Schwenkachse (6; 106) der Luftmischklappe (5; 105) in Strömungsrichtung nach dem Teilzylinder angeordnet ist, **dadurch gekennzeichnet dass** das Luftleitelement (15; 115) parallel zur Schwenkachse (6; 106) der Luftmischklappe (5; 105) verlaufend angeordnet ist und einen Winkel (α) von 5° bis 45°, insbesondere 10° bis 40°, zur radialen Richtung bezüglich der Schwenkachse (6; 106) aufweist und dass das Luftleitelement (15; 115) eine Länge von maximal der Hälfte und minimal einem Fünftel des Radius des Teilzylinders bei aufeinanderfallender Mittel- und Schwenkachse (6; 106) aufweist.

2. Klimaanlage nach einem der vorhergehenden Ansprüche, **dadurch gekennzeichnet, dass** der Übergang von Luftmischklappe (5; 105) zu Luftleitelement (15; 115) im Fußbereich abgerundet ausgebildet ist.

3. Klimaanlage nach einem der vorhergehenden Ansprüche, **dadurch gekennzeichnet, dass** das Luftleitelement (15; 115) abgesehen vom Fußbereich gerade ausgebildet ist.

4. Klimaanlage nach einem der vorhergehenden Ansprüche, **dadurch gekennzeichnet, dass** das Luftleitelement (15; 115) abgesehen vom Fußbereich eine konstante Dicke aufweist.

5. Klimaanlage nach einem der vorhergehenden Ansprüche, **dadurch gekennzeichnet, dass** das Luftleitelement (15; 115) zwischen zwei senkrecht zur Schwenkachse (6; 116) verlaufenden Verbindungsflächen (11, 12; 111, 112) der Luftmischklappe (5; 105) verlaufend ausgebildet ist.

6. Klimaanlage nach Anspruch 5, **dadurch gekennzeichnet, dass** mindestens eine der Verbindungsflächen (12; 112) beabstandet vom entsprechenden Ende der Luftmischklappe (5; 105) angeordnet ist.

7. Klimaanlage nach einem der vorhergehenden Ansprüche, **dadurch gekennzeichnet, dass** das Luftleitelement (15; 115) außermittig angeordnet ist.

8. Klimaanlage nach einem der vorhergehenden Ansprüche, **dadurch gekennzeichnet, dass** das Luftleitelement (15; 115) zum Warmluftkanal (W) hin gegenüber der radialen Richtung verlaufend angeordnet ist.

9. Klimaanlage nach einem der vorhergehenden Ansprüche, **dadurch gekennzeichnet, dass** das Luftleitelement (15) eine Länge aufweist, welche +/- 50%, insbesondere +/- 20%, dem Abstand des Luftleitelements (15) in gerader Linie vom näherliegenden in Richtung der Schwenkachse (6) verlaufenden Ende der Luftmischklappe (5) entspricht.

10. Klimaanlage nach einem der vorhergehenden Ansprüche, **dadurch gekennzeichnet, dass** zwischen der Bogenfläche der Klappe und dem Luftleitelement (115) mindestens eine Rippe (116) angeordnet ist.

11. Klimaanlage, nach einem der vorhergehenden Ansprüche, **dadurch gekennzeichnet, dass** die Klimaanlage zumindest eines der weiteren folgenden Bauteile umfasst: Filter, Mischkammer, mehrere Strömungskanäle und eine oder mehrere Steuerklappen zur Verteilung der Luft auf die Austrittskanäle.

## Claims

1. An air conditioning system (1), in particular for motor vehicles, comprising an air distributor housing (3), an evaporator (4), a heater, and a substantially partially cylindrical air mixer vent (5, 105), which is pivotably arranged about a pivot axis (6; 106) between a hot air duct (W) coming from the heater and a bypass duct (K) coming directly from the evaporator (4) and controls the axis, an air deflector element (15; 115) being arranged on the partial cylinder inner surface of the air mixer vent (5; 105) and protruding from the partial cylinder inner surface of the air mixer vent (5; 105), and the pivot axis (6; 106) of the air mixer vent (5; 105) being arranged in the direction of flow downstream of the partial cylinder, **characterized in that** the air deflector element (15; 115) is arranged to run in parallel to the pivot axis (6; 106) of the air mixer vent (5; 105) and has an angle (α) of 5° to 45°, in particular 10° to 40°, to the radial direction with respect to the pivot axis (6; 106), and the air deflector element (15; 115) has a length of at maximum half and at minimum one fifth of the radius of the partial cylinder when the center axis and pivot axis (6; 106) coincide.

2. An air conditioning system as claimed in any one of the preceding claims, **characterized in that** the transition from the air mixer vent (5; 105) to the air deflector element (15; 115) has a rounded design in the base region.

3. An air conditioning system as claimed in any one of the preceding claims, **characterized in that**, apart from the base region, the air deflector element (15; 115) has straight design.

4. An air conditioning system as claimed in any one of the preceding claims, **characterized in that**, apart from the base region, the air deflector element (15; 115) has a constant thickness.

5. An air conditioning system as claimed in any one of the preceding claims, **characterized in that** the air deflector element (15; 115) is designed such that it runs between two connecting surfaces (11, 12; 111, 112) of the air mixer vent (5; 105) which run perpendicular to the pivot axis (6; 116).

6. The air conditioning system as claimed in claim 5, **characterized in that** at least one of the connecting surfaces (12; 112) is arranged spaced apart from the corresponding end of the air mixer vent (5; 105).

7. An air conditioning system as claimed in any one of the preceding claims, **characterized in that** the air deflector element (15; 115) is arranged eccentrically.

8. An air conditioning system as claimed in any one of the preceding claims, **characterized in that** the air deflector element (15; 115) is arranged such that in relation to the radial direction it runs toward the hot air duct (W).

9. An air conditioning system as claimed in any one of the preceding claims, **characterized in that** the air deflector element (15) has a length which corresponds +/- 50%, in particular +/- 20%, to the distance of the air deflector element (15) in a straight line from the closer end of the air mixer vent (5), which end runs in the direction of the pivot axis (6).

10. An air conditioning system as claimed in any one of the preceding claims, **characterized in that** at least one rib (116) is arranged between the curved surface of the vent and the air deflector element (115).

11. An air conditioning system as claimed in any one of the preceding claims, **characterized in that** the air conditioning system comprises at least one of the following components: filter, mixing chamber, a plurality of flow ducts, and one or more control vents for distributing the air to the outlet ducts.

## Revendications

1. Système de climatisation (1), en particulier pour des véhicules automobiles, comprenant un carter répartiteur d'air (3), un évaporateur (4), un radiateur et un volet mélangeur d'air (5, 105) sensiblement en forme de cylindre partiel, volet mélangeur d'air qui, disposé entre un conduit d'air chaud (W) provenant du radiateur, et un conduit de dérivation (K) provenant directement de l'évaporateur (4), peut pivoter autour d'un axe de pivotement (6 ; 106) et régule lesdits conduits d'air chaud et de dérivation, où un élément déflecteur d'air (15 ; 115), qui dépasse de la surface intérieure du cylindre partiel du volet mélangeur d'air (5 ; 105), est disposé sur la surface intérieure du cylindre partiel du volet mélangeur d'air (5 ; 105), et l'axe de pivotement (6 ; 106) du volet mélangeur d'air (5 ; 105) est disposé, dans la direction d'écoulement, en aval du cylindre partiel,
**caractérisé en ce que** l'élément déflecteur d'air (15 ; 115) est disposé en s'étendant parallèlement à l'axe de pivotement (6 ; 106) du volet mélangeur d'air (5 ; 105) et présente un angle (α) de 5° à 45°, en particulier de 10° à 40°, par rapport à la direction radiale concernant l'axe de pivotement (6 ; 106), et **en ce que** l'élément déflecteur d'air (15 ; 115) présente une longueur égale au maximum à la moitié et, au minimum, à un cinquième du rayon du cylindre partiel lorsque l'axe médian et l'axe de pivotement (6 ; 106) coïncident.

2. Système de climatisation selon la revendication 1, **caractérisé en ce que** la transition formée entre le volet mélangeur d'air (5 ; 105) et l'élément déflecteur d'air (15 ; 115) est configurée en étant arrondie dans la zone de l'espace pour les pieds.

3. Système de climatisation selon l'une ou l'autre des revendications précédentes, **caractérisé en ce que** l'élément déflecteur d'air (15 ; 115) est configuré de façon rectiligne, sauf dans la zone de l'espace pour les pieds.

4. Système de climatisation selon l'une quelconque des revendications précédentes, **caractérisé en ce que** l'élément déflecteur d'air (15 ; 115) présente une épaisseur constante, sauf dans la zone de l'espace pour les pieds.

5. Système de climatisation selon l'une quelconque des revendications précédentes, **caractérisé en ce que** l'élément déflecteur d'air (15 ; 115) est configuré en s'étendant entre deux surfaces d'assemblage (11, 12 ; 111, 112) du volet mélangeur d'air (5 ; 105) qui s'étendent perpendiculairement à l'axe de pivotement (6 ; 116).

6. Système de climatisation selon la revendication 5, **caractérisé en ce qu'**au moins l'une des surfaces d'assemblage (12 ; 112) est disposée en étant espacée de l'extrémité correspondante du volet mélangeur d'air (5 ; 105).

7. Système de climatisation selon l'une quelconque des revendications précédentes, **caractérisé en ce que** l'élément déflecteur d'air (15 ; 115) est disposé de façon excentrée.

8. Système de climatisation selon l'une quelconque des revendications précédentes, **caractérisé en ce que** l'élément déflecteur d'air (15 ; 115) est disposé en s'étendant en direction du conduit d'air chaud (W), par rapport au sens radial.

9. Système de climatisation selon l'une quelconque des revendications précédentes, **caractérisé en ce que** l'élément déflecteur d'air (15) présente une longueur qui, suivant une tolérance de ± 50 %, en particulier de ± 20 %, correspond à la distance, en ligne droite, de l'élément déflecteur d'air (15), par rapport à l'extrémité du volet mélangeur d'air (5), la plus proche, s'étendant en direction de l'axe de pivotement (6).

10. Système de climatisation selon l'une quelconque des revendications précédentes, **caractérisé en ce qu'**au moins une nervure (116) est disposée entre la surface arquée du volet et l'élément déflecteur d'air (115).

11. Système de climatisation selon l'une quelconque des revendications précédentes, **caractérisé en ce que** le système de climatisation comprend au moins l'un des autres composants suivants : un filtre, une chambre de mélange, plusieurs conduits d'écoulement et un ou plusieurs volets de commande servant à la répartition de l'air aux conduits de sortie.
